# EUROPÄISCHE PATENTSCHRIFT

(11) **EP 1 240 250 B1**
(45) Veröffentlichungstag und Bekanntmachung des Hinweises auf die Patenterteilung: **27.08.2003**
(21) Anmeldenummer: 00983234.6
(22) Anmeldetag: 06.12.2000
(51) Int. Cl.: C08L 69/00, C08L 51/04

(54) **FÜLLSTOFFHALTIGE THERMOPLASTISCHE FORMMASSEN AUF BASIS VON POLYCARBONAT UND STYROLCOPOLYMEREN**
FILLED THERMOPLASTIC MOULDING MATERIALS ON THE BASIS OF POLYCARBONATE AND STYRENE COPOLYMERS
MASSES DE MOULAGE THERMOPLASTIQUES CONTENANT DES CHARGES, A BASE DE POLYCARBONATE ET DE COPOLYMERES STYROLIQUES

(30) Priorität: 09.12.1999 DE 19959410
(43) Veröffentlichungstag der Anmeldung: 18.09.2002
(73) Patentinhaber: BASF AKTIENGESELLSCHAFT, 67056 Ludwigshafen (DE)
(72) Erfinder: WEBER, Martin, 67487 Maikammer (DE); HECKMANN, Walter, 69469 Weinheim (DE); JAKOBI, Reinhard, 67133 Maxdorf (DE); KNOLL, Manfred, 67591 Wachenheim (DE); HOPFENSPIRGER, Xaver, 67454 Hassloch (DE)
(74) Vertreter: Isenbruck, Günter, Dr.
(86) Internationale Anmeldenummer: EP0012285
(87) Internationale Veröffentlichungsnummer: WO01042362

(56) Entgegenhaltungen:
- EP-A- 0 186 011
- EP-A- 0 345 652
- EP-A- 0 570 632
- DE-A- 19 753 541
- DATABASE CHEMABS [Online] CHEMICAL ABSTRACTS SERVICE, COLUMBUS, OHIO, US; retrieved from STN Database accession no. 78:44556/DN, HCAPLUS XP002164478 & JP 47 022442 B (UNITIKA CO.) 7. Oktober 1972 (1972-10-07)
- DATABASE WPI Section Ch, Week 199337 Derwent Publications Ltd., London, GB; Class A23, AN 1993-290558 XP002164481 -& JP 05 171030 A (MITSUBISHI GAS CHEM CO INC), 9. Juli 1993 (1993-07-09)
- DATABASE WPI Section Ch, Week 199418 Derwent Publications Ltd., London, GB; Class A13, AN 1994-148070 XP002164482 -& JP 06 093165 A (MONSANTO KASEI CO), 5. April 1994 (1994-04-05)
- DATABASE CHEMABS [Online] CHEMICAL ABSTRACTS SERVICE, COLUMBUS, OHIO, US; retrieved from STN Database accession no. 129:55057/DN, HCAPLUS XP002164479 -& JP 10 139995 A (TEIJIN CHEMICALS) 26. Mai 1998 (1998-05-26)
- DATABASE CHEMABS [Online] CHEMICAL ABSTRACTS SERVICE, COLUMBUS, OHIO, US; retrieved from STN Database accession no. 100:175956/DN, HCAPLUS XP002164480 -& JP 59 006250 A (MITSUBISHI RAYON ) 13. Januar 1984 (1984-01-13)

## Beschreibung

Die vorliegende Erfindung betrifft füllstoffhaltige thermoplastische Formmassen auf Basis von Polycarbonat und Styrolcopolymeren, Verfahren zu ihrer Herstellung und ihre Verwendung zur Herstellung von Formkörpern, Fasern und Folien, insbesondere zur Herstellung von Karosserieteilen für den Automobilsektor.

Polymerblends aus Polycarbonat und Styrolpolymeren, wie beispielsweise ABS (Acrylnitril-Butadien-Styrol-Polymerisate) oder ASA (Acrylnitril-Styrol-Acrylat-Polyrnerisate) zeichnen sich durch hervorragende mechanische Eigenschaften aus. Daher finden diese Formmassen in den verschiedensten Bereichen Verwendung, wie beispielsweise im Automobilbau, im Bausektor, für Büromaschinen, sowie in elektrischen Geräten und Haushaltsgeräten.

Zur Herstellung großflächiger Formteile ist ein geringer thermischer Ausdehnungskoeffizient (CTE) wünschenswert. Eine Senkung des thermischen Ausdehnungskoeffizienten ist durch Zusatz von Füll- oder Verstärkungsstoffen zu thermoplastischen Formmassen möglich. Hierbei werden jedoch gleichzeitig die Zähigkeit und die Fließfähigkeit der Produkte wesentlich herabgesetzt.

In der EP-B-0 391 413 sind gefüllte Polymer-Mischungen beschrieben, die aus einem aromatischen Polycarbonat und einem Kautschuk-modifizierten Polymer aufgebaut sind. Sie enthalten 4 bis 18 Gew.-% anorganische Füllstoffe, in denen mindestens 98 Gew.-% der Füllstoffteilchen im Polymerblend einen Teilchendurchmesser von weniger als 44 µm aufweisen. Dabei soll das durchschnittliche Füllstoffteilchendurchmesser -zu- Dicke-Verhältnis 4 bis 24 betragen. Es werden insbesondere speziell ausgewählte nichtkalzinierte Tone eingesetzt. Dabei kommen auch Gemische mehrerer unterschiedlicher Tone und Talk zur Anwendung. Von der Verwendung faserförmiger Verstärkungsstoffe wie Glasfasern wird abgeraten, da sie zu nicht akzeptablen Oberflächeneigenschaften führen sollen und an der Oberfläche der Formteile sichtbar sein sollen.

EP-B-0 135 904 betrifft Polyethylenterephthalat/Polycarbonat-Blends, die Talk (ein Magnesiumsilikat), als Füllstoff aufweisen. Die Formmassen sind aus Polyethylenterephthalat, einem thermoplastischen aromatischen Polycarbonat, einem pfropfmodifizierten Kautschuk auf Butadien-Basis und 0,1 bis 4 % Talk aufgebaut.

WO 96/06136 betrifft gefüllte Polycarbonat-Blendzusammensetzungen. Es werden Blends aus einem Polycarbonat und einem monovinylidenaromatischen Copolymer beschrieben, die keinen Pfropfkautschuk enthalten. Sie enthalten zudem einen anorganischen Füllstoff, der eine durchschnittliche Teilchengröße von maximal 10 µm aufweist, wobei das durchschnittliche Verhältnis von Durchmesser zu Dicke 4 bis 30 beträgt.

Als Füllstoffe werden Talk und Ton aufgeführt.

DE-A-197 53 541 betrifft Polycarbonatformmassen, die mindestens ein Polycarbonat, mindestens ein Pfropfcopolymerisat auf Basis eines Elastomeren mit einer Glasübergangstemperatur von unter 10°C, mindestens ein Copolymerisat, enthaltend vinylaromatische Monomere, mindestens einen Füllstoff und mindestens eine niedermolekulare halogenfreie Säure enthalten. Es ist angegeben, dass als Füllstoffe faserförmige Füllstoffe wie Glasfasern und teilchenförmige Füllstoffe eingesetzt werden können. Besonders bevorzugt ist der Einsatz teilchenförmiger Füllstoffe als alleinige Füllstoffe.

EP-A-0 570 632 betrifft in Masse polymerisierte Styrolpolymerzusammensetzungen, die mit einem Gemisch aus faserförmigen und kugelförmigen Teilchen verstärkt sind. Das in Masse polymerisierte Styrolpolymerzusammensetzungsharz enthält in Masse polymerisiertes ABS. Es wird angegeben, dass die Verwendung eines Gemisches aus faserförmigen und kugelförmigen Teilchen zur Verstärkung von in Masse polymerisierten Styrolpolymerzusammensetzungen zu einem Produkt führt, das verbesserte Eigenschaften wie Festigkeit und Schlagzähigkeit aufweist, wobei gleichzeitig andere mechanische oder thermische Eigenschaften nicht verschlechtert werden. Es ist zudem angegeben, dass die Zusammensetzungen eine hervorragende Kombination von Schlagzähigkeit, Hochtemperatureigenschaften, Zugfestigkeit und Biegemodul aufweisen. Bei bestimmten Volumenanteilen von faserförmigen und kugelförmigem Material wird eine unerwartet hohe Schlagzähigkeit gefunden. Die Formbeständigkeitstemperatur bleibt hoch, sofern ein bestimmtes Volumenverhältnis zwischen faserförmigen und kugelförmigen Füllstoffen vorliegt.

Die beschriebenen Formmassen weisen nicht für alle Anwendungen ein geeignetes Eigenschaftsprofil aus geringem thermischem Ausdehnungskoeffizienten und dennoch ausreichender Zähigkeit und Fließfähigkeit auf.

Ein weiteres Problem bei der Verarbeitung der beschriebenen füllstoffhaltigen Formmassen zu großflächigen Teilen stellen Oberflächendefekte im Angußbereich dar.

Aufgabe der vorliegenden Erfindung ist daher die Bereitstellung von Formmassen auf Basis von Polycarbonat, Styrolcopolymeren und Füll- bzw. Verstärkungsstoffen, die neben reduzierter thermischer Ausdehnung auch eine gute Zähigkeit, insbesondere Schädigungsarbeit bei -30°C sowie hohe Reißdehnung und Kerbschlagzähigkeit bei Raumtemperatur aufweisen. Sie sollen zudem neben der guten Dimensionsbeständigkeit und der hohen Zähigkeit auch eine sehr gute Fließfähigkeit aufweisen. Weiterhin soll vorzugsweise die Oberflächenqualität im Angußbereich verbessert werden.

Es wurde erfindungsgemäß gefunden, daß eine spezielle Kombination aus mineralischen teilchenförmigen Füllstoffen und Glasfasern beim Einsatz in Polymerblends auf Basis von Polycarbonat und Styrolcopolymeren eine reduzierte thermische Ausdehnung bewirkt, wobei gleichzeitig eine gute Zähigkeit, insbesondere Schädigungsarbeit bei -30 °C sowie eine hohe Reißdehnung und Kerbschlagzähigkeit bei Raumtemperatur erhalten werden. Zudem weisen die Formmassen eine sehr gute Fließfähigkeit und eine verbesserte Oberflächenqualität im Angußbereich auf.

Die Erfindung betrifft thermoplastische Formmassen, enthaltend die Komponenten A, B, C und D sowie gegebenenfalls E, F, G und H, deren Summe 100 Gew.-% ergibt,
a) 10 bis 93 Gew.-% mindestens eines aromatischen Polycarbonats A,
b) 3 bis 50 Gew.-% mindestens eines Pfropfpolymerisats B aus
   b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen, und mit einer Glasübergangstemperatur von unter 0 °C,
   b2) 20 bis 60 Gew.-% einer Pfropfauflage B2 aus
      b21) 60 bis 95 Gew.-% Styrol oder substituierten Styrolen B21 der allgemeinen Formel I 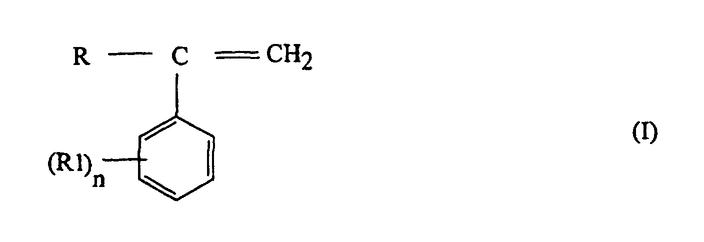 worin R einen C₁₋₈-Alkylrest oder Wasserstoff und R¹ einen C₁₋₈-Alkylrest bedeutet und n den Wert 1, 2 oder 3 hat, oder deren Mischungen und
      b22) 5 bis 40 Gew.-% mindestens eines ungesättigten Nitrils B22,
c) 3 bis 50 Gew.-% mindestens eines thermoplastischen Copolymerisats C aus
   c1) 60 bis 85 Gew.-% Styrol oder substituierten Styrolen C1 der allgemeinen Formel I oder deren Mischungen und
   c2) 15 bis 40 Gew.-% mindestens eines ungesättigten Nitrils C2,
d) 1 bis 20 Gew.-% einer Mischung D aus
   d1) 5 bis 95 Gew.-% mindestens eines teilchenförmigen mineralischen Füllstoffs D1 und
   d2) 5 bis 95 Gew.-% faserförmige Füllstoffe, vorzugsweise Glasfasern D2, wobei mindestens 50 Gew.-% der faserförmigen Füllstoffe, vorzugsweise Glasfasern eine Länge von mindestens 50 µm aufweisen,
e) 0 bis 10 Gew.-% mindestens eines Copolymers E aus mindestens zwei unterschiedlichen Alkylestern, aromatischen oder alkylaromatischen Estern der Acrylsäure oder der Methacrylsäure,
f) 0 bis 25 Gew.-% mindestens eines thermoplastischen Polyesters F,
g) 0 bis 2 Gew.-% mindestens einer niedermolekularen organischen Säure G,
h) 0 bis 25 Gew.-% mindestens einer halogenfreien Phosphorverbindung H,
i) 0 bis 45 Gew.-% weiterer Zusatzstoffe I.

Nachstehend werden die bevorzugten Komponenten A bis I erläutert.

### Komponente A

Die Komponente A ist in den erfindungsgemäßen Formmassen in einer Menge von 10 bis 93, insbesondere 45 bis 65 Gew.-% enthalten.

Bevorzugt werden als Komponente A halogenfreie Polycarbonate eingesetzt. Geeignete halogenfreie Polycarbonate sind beispielsweise solche auf Basis von Diphenolen der allgemeinen Formel II 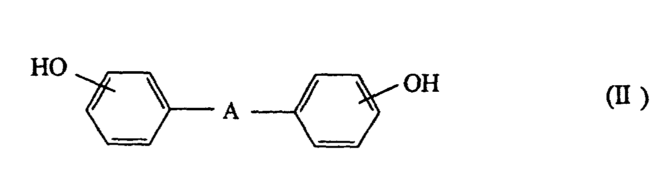 worin A eine Einfachbindung, eine C₁- bis C₃-Alkylen-, eine C₂- bis C₃-Alkyliden-, eine C₃- bis C₆- Cycloalkylidengruppe sowie -S- oder -SO₂- bedeutet

Bevorzugte Diphenole der Formel II sind beispielsweise Hydrochinon, Resorcin, 4,4'-Dihydroxyphenyl, 2,2-Bis-(4-hydroxyphenyl)-propan, 2,4-Bis-(4-hydroxyphenyl)-2-methylbutan, 1,1-Bis-(4-hydroxyphenyl)cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolycarbonat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechem erzielt wird. (Bezüglich polydiorganosiloxanhaltigen Polycarbonaten siehe beispielsweise DE-A 33 34 782).

Geeignete Kettenabbrecher sind beispielsweise Phenol, oder p-t-Butylphenol, aber auch langkettige Alkylphenole wie 4-(1,3-Tetramethyl-butyl)-phenol, gemäß DE-A 28 42 005 oder Monoalkylphenole oder Dialkylphenole mit insgesamt 8 bis 20 C-Atomen in den Alkylsubstituenten gemäß DE-A 35 06 472, wie p-Nonylphenol, 3,5-di-t-Butylphenol, p-t-Octylphenol, p-Dodecylphenol, 2-(3,5-Dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

### Komponente B

Die Komponente B ist in den erfindungsgemäßen Formmassen in einer Menge von 3 bis 50, insbesondere 10 bis 30 Gew.-% enthalten. Die Komponente B ist vorzugsweise halogenfrei.

Die Pfropfpolymerisate B sind aufgebaut aus
b1) 40 bis 80 Gew.-%, vorzugsweise 50 bis 70 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0°C,
b2) 20 bis 60 Gew.-%, vorzugsweise 30 bis 50 Gew.-% einer Pfropfauflage B2 aus
   b21) 60 bis 95 Gew.-%, bevorzugt 70 bis 85 Gew.-% Styrol oder substituierten Styrolen B21 der allgemeinen Formel I 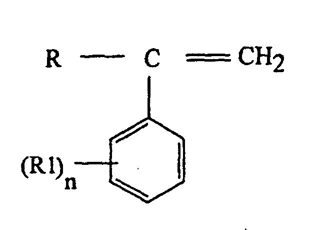 worin R ein C₁- bis C₈ Alkylrest, bevorzugt Methyl oder Ethyl oder Wasserstoff bedeutet und R¹ einen C₁- bis C₈- Alkylrest, bevorzugt Methyl oder Ethyl, darstellt und n den Wert 1, 2 oder 3 hat, oder deren Mischungen und
   b22) 5 bis 40 Gew.-%, vorzugsweise 15 bis 30 Gew.-% mindestens eines ungesättigten Nitrils B22, bevorzugt Acrylnitril oder Methacrylnitril oder deren Mischungen.

Für die Pfropfgrundlage B1 kommen Polymerisate in Betracht, deren Glasübergangstemperatur unterhalb von 10°C, vorzugsweise unterhalb von 0°C, besonders bevorzugt unterhalb von -20 °C liegt. Dies sind z.B. Elastomere auf der Basis von C₁- bis C₈―Alkylestern der Acrylsäure, die gegebenenfalls weitere Comonomere enthalten können, auf der Basis von Ethylen/Propylen, auf der Basis von Dienen wie Butadien oder auf der Basis von Siloxanen. Als Pfropfkautschuk ergeben sich dann ASA-, AES-, ABS- bzw. Polysiloxankautschuke.

Bevorzugt sind Pfropfgrundlagen B1, die aufgebaut sind aus
b11) 70 bis 99,9 Gew.-%, vorzugsweise von 69 bis 79 Gew.-% mindestens eines Alkylacrylates B11 mit 1 bis 8 C-Atomen im Alkylrest, vorzugsweise n-Butylacrylat und/oder 2-Ethyl-hexylacrylat, insbesondere n-Butylacrylat als alleiniges Alkylacrylat
b12) 0 bis 30 Gew.-%, insbesondere 20 bis 30 Gew.-% eines weiteren copolymerisierbaren monoethylenisch ungesättigten Monomeren B12 wie Butadien, Isopren, Styrol, Acrylnitril, Methylmethacrylat oder Vinylmethylether oder deren Mischungen
b13) 0,1 bis 5 Gew.-%, vorzugsweise 1 bis 4 Gew.-% eines copolymerisierbaren, polyfunktionellen, vorzugsweise bi- oder tri-funktionellen, die Vernetzung bewirkenden Monomeren B13, wobei die Summe von B11, B12 und B13 100 Gew.-% ergibt.

Als solche bi- oder polyfunktionellen Vernetzungsmonomeren B13 eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358.

Von den Pfropfauflagen B2 sind diejenigen bevorzugt, in denen B21 Styrol oder α-Methylstyrol oder deren Mischungen und B22 Acrylnitril oder Methacrylnitril bedeutet. Als bevorzugte Monomeren-Gemische werden vor allem Styrol und Acrylnitril oder α-Methylstyrol und Acrylnitril eingesetzt. Die Pfropfauflagen sind erhältlich durch Copolymerisation der Komponenten B21 und B22.

Die Pfropfgrundlage B 1 der Pfropfpolymerisate B, die aus den Komponenten B11, gegebenenfalls B12 und B13 aufgebaut ist, wird auch als ASA-Kautschuk bezeichnet. Ihre Herstellung ist an sich bekannt und beispielsweise in der DE-A 28 26 925, der DE-A 31 49 358 und der DE-A 34 14 118 beschrieben.

Die Herstellung der Propfpolymerisate B kann beispielsweise nach der in der DE-C 12 60 135 beschriebenen Methode erfolgen.

Der Aufbau der Pfropfauflage (Pfropfhülle) der Propfpolymerisate kann ein- oder zweistufig erfolgen.

Im Falle des einstufigen Aufbaus der Pfropfhülle wird ein Gemisch der Monomeren B21 und B22 in dem gewünschten Gew.-Verhältnis im Bereich von 95:5 bis 50:50, vorzugsweise von 90:10 bis 65:35 in Gegenwart des Elastomeren B1, in an sich bekannter Weise (vgl.. z.B. DE-A 28 26 925), vorzugsweise in Emulsion, polymerisiert.

Im Falle eines zweistufigen Aufbaus der Pfropfhülle B2 macht die 1. Stufe im allgemeinen 20 bis 70 Gew.-%, vorzugsweise 25 bis 50 Gew.-%, bezogen auf B2, aus. Zu ihrer Herstellung werden vorzugsweise nur Styrol oder substituierte Styrole oder deren Mischungen B21 verwendet.

Die 2. Stufe der Pfropfhülle macht im allgemeinen 30 bis 80 Gew.-%, insbesondere 50 bis 75 Gew.-%, jeweils bezogen auf B2, aus. Zu ihrer Herstellung werden Mischungen aus den Monomeren B21 und den Nitrilen B22 im Gewichtsverhältnis B21/B22 von im allgemeinen 90:10 bis 60:40, insbesondere 80:20 bis 70:30 angewendet.

Die Bedingungen der Pfropfpolymerisation werden vorzugsweise so gewählt, daß Teilchengrößen von 50 bis 700 nm (d₅₀-Wert der integralen Massenverteilung) resultieren. Maßnahmen hierzu sind bekannt und z.B in der DE-A 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfpolymerisate mit unterschiedlicher Teilchengröße zu verwenden.

Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist.

In einer bevorzugten Ausführungsform wird eine Mischung aus zwei Pfropfpolymerisaten mit Teilchendurchmessern (d₅₀-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfpolymerisate ist vorzugsweise derselbe, obwohl die Hülle des grobteiligen Pfropfpolymerisates insbesondere auch zweistufig aufgebaut werden kann.

Mischungen aus der Komponente A und B, wobei letztere ein grob- und ein feinteiliges Pfropfpolymerisat aufweist, sind z.B. in der DE-A 36 15 607 beschrieben. Mischungen aus der Komponente A und B, wobei letztere eine zweistufige Pfropfhülle aufweist, sind aus EP-A-0 111 260 bekannt.

### Komponente C

Die Komponente C ist in den erfindungsgemäßen Formmassen in einer Menge von 3 bis 50, insbesondere 10 bis 30 Gew.-% enthalten. Sie ist vorzugsweise halogenfrei.

Die Copolymerisate C sind erfindungsgemäß aus
c1) 60 bis 85 Gew.-%, vorzugsweise 70 bis 85 Gew.-% Styrol oder substituierten Styrolen Cl der vorstehenden allgemeinen Formel I oder deren Mischungen und
c2) 15 bis 40 Gew.-%, vorzugsweise 15 bis 30 Gew.-% mindestens eines ungesättigten Nitrils C2, bevorzugt Acrylnitril oder Methacrylnitril oder deren Mischungen
aufgebaut.

Die Copolymerisate C sind harzartig, thermoplastisch und kautschukfrei. Besonders bevorzugte Copolymerisate C sind solche aus Styrol und Acrylnitril, aus α-Methylstyrol und Acrylnitril oder aus Styrol, α-Methylstyrol und Acrylnitril. Es können auch mehrere der beschriebenen Copolymere gleichzeitig eingesetzt werden.

Solche Copolymerisate entstehen häufig bei der Pfropfpolymerisation zur Herstellung der Komponente B als Nebenprodukte, besonders dann, wenn große Mengen Monomere auf kleine Mengen Kautschuk gepropft werden.

Die Copolymerisate C sind an sich bekannt und lassen sich durch radikalische Polymerisation, insbesondere Emulsions-, Suspensions-, Lösungs- und Massenpolymerisation herstellen. Sie weisen Viskositätszahlen im Bereich von 40 bis 160, vorzugsweise 60 bis 110 ml/g (gemessen in 0,5%-iger DMF-Lösung bei 23 °C) auf, dies entspricht mittleren Molekulargewichten M_{w} (Gewichtsmittelwert) von 40 000 bis 2 000 000.

### Komponente D

Die Komponente D ist in den erfindungsgemäßen Formmassen in einer Menge von 1 bis 20, insbesondere 10 bis 17,5 Gew.-% enthalten.

Der Anteil der Komponente D1 beträgt vorzugsweise 5 bis 95 und insbesondere 5 bis 90 Gew.-%, der Anteil der Komponente D2 vorzugsweise 5 bis 95 und insbesondere 10 bis 95 Gew.-%, bezogen auf die Komponente D.

Als teilchenförmige mineralische Füllstoffe D1 eignen sich amorphe Kieselsäure, Carbonate wie Magnesiumcarbonat (Kreide), gepulverter Quarz, Glimmer, unterschiedlichste Silikate wie Tone, Muskovit, Biotit, Suzoit, Zinnmaletit, Talkum, Chlorit, Phlogophit, Feldspat, Calciumsilikate wie Wollastonit, oder Kaolin, besonders kalzinierter Kaolin.

Nach einer besonders bevorzugten Ausführungsform werden teilchenförmige Füllstoffe verwendet, von denen mindestens 95 Gew.-%, bevorzugt mindestens 98 Gew.-% der Teilchen einen Durchmesser (größte Ausdehnung), bestimmt am fertigen Produkt, von weniger als 45 µm, bevorzugt weniger als 40 µm aufweisen und deren sogenanntes Aspektverhältnis vorzugsweise im Bereich von 1 bis 25, bevorzugt im Bereich von 2 bis 20 liegt, bestimmt am fertigen Produkt, d.h. in der Regel einem Spritzgußformteil.

Die Teilchendurchmesser können dabei z.B. dadurch bestimmt werden, daß elektronenmikroskopische Aufnahmen von Dünnschnitten der Polymermischung aufgenommen und mindestens 25, bevorzugt mindestens 50 Füllstoffteilchen für die Auswertung herangezogen werden. Ebenso kann die Bestimmung der Teilchendurchmesser über Sedimentationsanalyse erfolgen, gemäß Transactions of ASAE, Seite 491 (1983). Der Gewichtsanteil der Füllstoffe, der weniger als 40 µm beträgt, kann auch mittels Siebanalyse gemessen werden. Das Aspektverhältnis ist das Verhältnis von Teilchendurchmesser zu Dicke (größter Ausdehnung zu kleinster Ausdehnung).

Besonders bevorzugt werden als teilchenförmige Füllstoffe Talkum, Kaolin, wie calcinierter Kaolin oder Wollastonit oder Mischungen aus zwei oder allen dieser Füllstoffe. Darunter wird Talkum mit einem Anteil von mindestens 95 Gew.-% an Teilchen mit einem Durchmesser von kleiner als 40 µm und einem Aspektverhältnis von 1,5 bis 25, jeweils bestimmt am fertigen Produkt, besonders bevorzugt. Kaolin hat bevorzugt einen Anteil von mindestens 95 Gew.-% an Teilchen mit einem Durchmesser von kleiner als 20 µm und einem Aspektverhältnis von 1,2 bis 20, jeweils bestimmt am fertigen Produkt.

Als Komponente D2 werden faserförmige Füllstoffe wie Kohlenstofffasern, Kaliumtitanat-Whisker, Aramidfasern oder bevorzugt Glasfasern eingesetzt, wobei mindestens 50 Gew.-% der faserförmigen Füllstoffe (Glasfasern) eine Länge von mehr als 50 µm aufweisen. Die verwendeten (Glas)fasern können vorzugsweise einen Durchmesser von bis zu 25 µm, besonders bevorzugt 5 bis 13 µm aufweisen. Vorzugsweise weisen mindestens 70 Gew.-% der Glasfasern eine Länge von mehr als 60 µm auf. Besonders bevorzugt beträgt im fertigen Formteil die mittlere Länge der Glasfasern 0,08 bis 0,5 mm. Die Länge der Glasfasern bezieht sich auf ein fertiges Formteil, das beispielsweise nach dem Spritzgießen erhalten wird. Dabei können die Glasfasern den Formmassen bereits in der entsprechend abgelängten Form oder auch in Form von Endlossträngen (Rovings) zugesetzt werden.

### Komponente E

Die Komponente E wird in den erfindungsgemäßen Formmassen in einer Menge von 0 bis 10, vorzugsweise 0 bis 5 Gew.-% eingesetzt.

Die Copolymeren E sind erfindungsgemäß aus mindestens zwei unterschiedlichen Alkylestern, aromatischen oder alkylaromatischen Estern der Acrylsäure oder der Methacrylsäure oder deren Mischungen aufgebaut.

Im allgemeinen haben die Ester 1 bis 10, bevorzugt 1 bis 8 Kohlenstoffatome im Alkylrest. Der Alkylrest kann sowohl linear als auch verzweigt sein. Zu den Alkylresten zählen Methyl, Ethyl, n-Propyl, i-Propyl, n-Butyl, i-Butyl, t-Butyl, n-Pentyl, 2-Ethylhexyl oder Cyclohexyl. Bevorzugt werden Methylmethacrylat, Cyclohexylmethacrylat, n-Butylacrylat oder 2-Ethylhexylacrylat verwendet. Unter den aromatischen Estern sind Ester mit 6 bis 18 Kohlenstoffatomen bevorzugt, darunter insbesondere Phenyl. Besonders bevorzugt werden Copolymere E, die von 70 bis 99, insbesondere von 80 bis 93 Gew.-% Methylmethacrylat und von 1 bis 30, insbesondere von 7 bis 20 Gew.-% n-Butylacrylat enthalten.

Erfindungsgemäß haben die Polymeren E ein hohes Molekulargewicht. In der Regel weisen sie Molekulargewichte (Gewichtsmittelwert M_{w}) von mindestens 1.000.000 g/mol (gemessen mittels Gelpermeationschromatographie in Tetrahydrofuran gegen einen Polystyrolstandard) auf. Bevorzugte Copolymere E haben Molekulargewichte M_{w} von 1.000 000 g/mol oder darüber, beispielsweise mindestens 1.200 000 g/mol. Im allgemeinen haben die Copolymeren E eine Glasübergangstemperatur im Bereich von 40 bis 125, bevorzugt 70 bis 120 °C (bestimmt mittels DSC-Messungen, bei einer Aufheizrate von 10 K/min, zweiter Cyclus nach Aufheizen auf 175 °C und Abkühlen auf Raumtemperatur).

### Komponente F

Die Komponente F wird in den erfindungsgemäßen Formmassen in einer Menge von 0 bis 25, vorzugsweise 0 (bei Vorliegen 10) bis 20 Gew.-% eingesetzt.

Als Komponente F wird vorzugsweise ein thermoplastischer Polyester mit aliphatischen Dioleinheiten eingesetzt.

Unter einem thermoplastischen Polyester F werden im Sinne der vorliegenden Erfindung nicht Polycarbonate verstanden, wie sie als Komponente A eingesetzt werden können. Die thermoplastischen Polyester leiten sich bevorzugt von aliphatischen Dihydroxyverbindungen und aromatischen Dicarbonsäuren ab.

Eine Gruppe bevorzugter teilaromatischer Polyester F sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure wie oben beschrieben stammt. Der aromatische Ring kann auch substituiert sein, beispielsweise durch Halogene wie Chlor oder Brom oder durch C₁₋₄-Alkylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Die aromatischen Dicarbonsäuren weisen in der Regel von 8 bis 30 C-Atome auf. Der bzw. die aromatischen Ringe können substituiert sein, z.B. mit einem oder mehreren C₁- bis C₄-Alkylresten wie Methyl, Ethyl, n-Propyl, i-Propyl, n-Butyl, i-Butyl oder t-Butyl. Als bevorzugte aromatische Dicarbonsäuren sind Terephthalsäure, Isophthalsäure oder 2,6-Naphthalindicarbonsäure zu nennen. Bevorzugt werden Mischungen aus 5 bis 100 mol-% Isophthalsäure und 0 bis 95 mol-% Terephthalsäure, insbesondere Mischungen von 20 bis 50 mol-% Isophthalsäure und 50 bis 80 mol-% Terephthalsäure.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt sein.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol, 1,4-Cyclohexandimethylol und Neopentylglykol oder deren Mischungen bevorzugt.

Als besonders bevorzugte thermoplastische Polyester F sind Polyalkylenterephthalate, die sich von Alkandiolen mit 2 bis 6 C-Atomen ableiten, zu nennen. Von diesen werden insbesondere Polyethylenterephthalat, Polytrimethylenterephthalat und Polybutylenterephthalat oder deren Mischungen bevorzugt.

Die Viskositätszahl der Polyester F liegt im allgemeinen im Bereich von 70 bis 220, vorzugsweise von 100 bis 150 (gemessen bei 25°C in einer 0,5 Gew.-%-igen Lösung in einem Phenol/o-Dichlorbenzolgemisch (Gew.-Verh. 1:1).

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

### Komponente G

Die Komponente G ist in den erfindungsgemäßen Formmassen in einer Menge von 0 bis 2, vorzugsweise 0 bis 1,8, insbesondere 0 (bei Vorliegen 0,1) bis 0,5 Gew.-% enthalten.

Komponente G ist eine niedermolekulare halogenfreie organische Säure.

Unter niedermolekular im Sinne der vorliegenden Erfindung werden bis zu mehrkernige, beispielsweise bis zu fünfkernige Verbindungen, insbesondere monomolekulare Verbindungen verstanden.

Die Säuren sind erfindungsgemäß halogenfrei, d.h. enthalten im molekularen Gerüst keine Halogene. Säuren, die geringfügige halogenhaltige Verunreinigungen aufweisen, sind dagegen erfindungsgemäß mit umfaßt.

Unter Säuren in Sinne der Erfindung werden auch deren Hydrate verstanden.

Vorteilhafterweise werden Säuren eingesetzt, die bei den Verarbeitungstemperaturen nicht oder nur gering flüchtig sind bzw. sich bei Temperaturen von bis zu etwa 300 °C nicht zersetzen.

Die Säuren können eine, zwei oder mehrere, beispielsweise bis zu zehn Säuregruppen enthalten.

Bevorzugt werden organische Säuren eingesetzt. Es kommen sowohl aromatische als auch aliphatische Säuren in Betracht. Ebenso können aliphatisch/aromatische Säuren verwendet werden. Zu den bevorzugten Säuren zählen Palmitinsäure, Stearinsäure, Benzoesäure, Isophthalsäure, Terephthalsäure, Trimellithsäure, Sulfonsäuren wie p-Toluolsulfonsäure, Fumarsäure, Zitronensäure, Mandelsäure oder Weinsäure.

Besonders bevorzugt werden Zitronensäure oder p-Toluolsulfonsäure oder deren Mischungen eingesetzt. Beispielsweise kann darin der Gewichtsanteil der Zitronensäure von 1 bis 99, bevorzugt von 10 bis 90 % und der der p-Toluolsulfonsäure entsprechend von 1 bis 99, bevorzugt von 10 bis 90 % betragen.

### Komponente H

Komponente H ist in den erfindungsgemäßen Formmassen in einer Menge von 0 bis 25, vorzugsweise 0 bis 20, insbesondere 0 (bei Vorliegen 0,2) bis 10 Gew.-% enthalten.

Als Komponente H können alle bekannten üblichen phosphorhaltigen Flammschutzmittel eingesetzt werden. Bevorzugt werden die in der DE-A-40 34 336 und/oder die in der EP-A 0 522 397 aufgeführten Flammschutzmittel eingesetzt. Beispiele sind Tri-(2,6-dimethylphenyl)phosphat, Triphenylphosphat, Tricresylphosphat, Diphenyl-2-ethylcresylphosphat, Diphenyl-cresylphosphat, Tri(isopropylphenyl)phosphat sowie Phosphorsäure-bis-phenyl-(4-phenylphenyl)ester, Phosphorsäure-phenyl-bis-(4 - phenylphenyl) ester, Phosphorsäure-tris-(4-phenylphenyl)ester, Phosphorsäure-bis-phenyl-(benzylphenyl)ester, Phosphorsäure-phenyl-bis-(benzylphenyl)ester, Phosphorsäure-tris-(benzylphenyl)ester, Phosphorsäure-phenyl-bis-[1-phenylethylphenyl]ester, Phosphorsäure-phenyl-bis-[1-methyl-1-phenylethylphenyl]ester und Phosphorsäure-phenyl-bis-[4-(1-phenethyl)-2,6-dimethylphenyl]ester. Sie können auch im Gemisch mit Triphenylphosphinoxid oder Tri-(2,6-dimethylphenyl) phosphinoxid eingesetzt werden.

Zudem sind als Flammschutzmittel Resorcinoldiphosphat und entsprechend höhere Oligomere, Hydrochinondiphosphat und entsprechende höhere Oligomere bevorzugt.

Es kann ferner auf die in EP-A-0 103 230, EP-A-0 174 493, EP-A-0 206 058, EP-A-0 363 608 und EP-A-0 558 266 beschriebenen Verbindungen verwiesen werden.

### Komponente I

Komponente I wird in Mengen von 0 bis 45, vorzugsweise 0 bis 20, insbesondere 0 (bei Vorliegen 0,4) bis 10 Gew.-% eingesetzt.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen 0 bis 45, vorzugsweise 0 bis 20, insbesondere 0 (bei Vorliegen 0,2) bis 10 Gew.-%, bezogen auf das Gesamtgewicht der Zusammensetzung.

Pigmente und Farbstoffe sind allgemein in Mengen von 0 bis 4, bevorzugt 0 bis 3,5 und insbesondere 0 (bei Vorliegen 0,5) bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃.Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr, Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Lithium-Halogenide, ggf. in Verbindung mit Kupfer-(I)-Halogeniden, z.B. Chloriden, Bromiden und Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden. Weiterhin können auch Ethylenoxid-Propylenoxid-Copolymere als Gleit- und Entformungsmittel verwendet werden.

Insbesondere vorteilhaft ist der Einsatz von UV- und Wärmestabilisatoren für Polycarbonat und Styrolcopolymere. Beispiele geeigneter Stabilisatoren sind zudem in DE-A-44 19 897 aufgeführt. Weiterhin können Umesterungsinhibitoren, wie Phosphate, Phosphite oder Phosphonite enthalten sein.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung unter Entfernen der Lösungsmittel ist möglich. Geeignete organische Lösungsmittel sind beispielsweise Chlorbenzol, Gemische von Chlorbenzol und Methylenchlorid oder Gemische von Chlorbenzol und aromatischen Kohlenwasserstoffen wie Toluol. Vorzugsweise wird ohne chlorhaltige Lösungsmittel gearbeitet. Das Eindampfen der Lösungsmittelgemische kann beispielsweise in Eindampfextrudern erfolgen.

Das Mischen der beispielsweise trockenen Komponenten A bis D und gegebenenfalls E bis I kann nach allen bekannten Methoden erfolgen. Vorzugsweise geschieht das Mischen bei Temperaturen von 200 bis 320°C durch gemeinsames Extrudieren, Kneten oder Verwalzen der Komponenten, wobei die Komponenten gegebenenfalls zuvor aus der bei der Polymerisation erhaltenen Lösung oder aus der wäßrigen Dispersion isoliert worden sind.

Die erfindungsgemäßen thermoplastischen Formmassen können nach den bekannten Verfahren der Thermoplastverarbeitung verarbeitet werden, beispielsweise durch Extrudieren, Spritzgießen, Kalandrieren, Hohlkörperblasen oder Sintern.

Die erfindungsgmäßen Formmassen können zur Herstellung von Folien, Fasern und Formkörpern eingesetzt werden. Zudem können sie besonders bevorzugt zur Herstellung von Karosserieteilen im Automobilsektor, insbesondere zur Herstellung von großflächigen Automobilaußenteilen eingesetzt werden.

Die Erfindung betrifft auch entsprechende Formkörper, Fasern oder Folien sowie Karosserieteile von Kraftfahrzeugen.

Die Erfindung wird durch die nachfolgenden Beispiele näher erläutert.

### Beispiele

Die mittlere Teilchengröße und die Teilchengrößenverteilung wurden aus der integralen Massenverteilung an einer veraschten und mittels Ultraschall dispergierten Probe bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796 bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert. Zur Charakterisierung der Breite der Teilchengrößenverteilung der Kautschukteilchen werden neben dem d₅₀-Wert (mittlerer Teilchendurchmesser) die sich aus der integralen Massenverteilung ergebenden d₁₀- und d₉₀-Werte herangezogen. Der d₁₀- bzw. d₉₀-Wert der integralen Massenverteilung ist dabei entsprechend dem d₅₀-Wert definiert mit dem Unterschied, daß sie auf 10 bzw. 90 Gew.-% der Teilchen bezogen sind. Der Quotient Q = (d₉₀-d₁₀)/d₅₀ stellt ein Maß für die Verteilungsbreite der Teilchengröße dar.

Es wurden folgende Komponenten eingesetzt:
A: Ein handelsübliches Polycarbonat auf der Basis von Bisphenol A mit einer Viskositätszahl von 61,3 ml/g, gemessen an einer 0,5 Gew.-%-igen Lösung in Methylenchlorid bei 23 °C.
B1: Ein feinteiliges Pfropfpolymerisat, hergestellt aus
   β1) 16 g Butylacrylat und 0,4 g Tricyclodecenylacrylat, die in 150 g Wasser unter Zusatz von 1 g des Natriumsalzes einer C₁₂ - C₁₈-Paraffinsulfonsäure, 0,3 g Kaliumpersulfat, 0,3 g Natriumhydrogencarbonat und 0,15 g Natriumpyrophosphat unter Rühren auf 60 °C erwärmt wurden. 10 Minuten nach dem Anspringen der Polymerisationsreaktion wurde innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vemetzten Butylacrylat-Polymerisats hatte einen Feststoffgehalt von 40 Gew.-%, die mittlere Teilchengröße (Gewichtsmittel) wurde zu 76 nm ermittelt, und die Teilchengrößenverteilung war eng (Quotient Q = 0,29).
   β2) 150 g des nach β1) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65 °C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.
B2: Ein grobteiliges Pfropfpolymerisat, das folgendermaßen hergestellt wurde:
   β3) Zu einer Vorlage aus 1,5 g des nach β1 hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C₁₂ - C₁₈-Paraffinsulfonsäure in 25 g Wasser bei 60 °C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 430 nm ermittelt, die Teilchengrößenverteilung war eng (Q = 0,1).
   β4) 150 g des nach β3 hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65 °C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.
C: Copolymer aus 81 Gew.-% Styrol und 19 Gew.-% Acrylnitril mit einer Viskositätszahl von 72 ml/g (gemessen in einer 0,5 Gew.-%-igen Lösung in Dimethylformamid bei 23 °C).
D1: Talkum IT-Extra, Hersteller Norwegian Talc
   X₁₀ = 1,7 µm, X₉₀ = 10,82 µm [Bestimmt mittels Laserbeugung, wobei die Mineralien in einer Suspensionszelle in einem VE-Wasser/1% CV-K8-Tensid-Gemisch (Vertreiber: CV-Chemievertrieb, Hannover) homogenisiert wurden (Magnetrührer, Drehzahl 60 min⁻¹)].
   pH-Wert der wässrigen Suspension: 8,5
D2: Glasfaser mit einer Epoxysilan-Schlichte und einem Faserdurchmesser von 10 µm und einer Stapellänge von 4,5 mm (z.B. PPG 3786).
D3: Glasfaser mit einer Expoxysilanschlichte und einem Faserdurchmesser von 6 µm und einer Stapellänge von 4,5 mm
F: Polybutylenterephthalat, z.B. Ultradur® B 4500 der BASF AG, charakterisiert durch eine Viskositätszahl von 130 (gemessen in 0,5 Gew.-%-iger Lösung aus Phenol/o-Dichlorbenzol).
G: Zitronensäure-Hydrat, Reinheit 99 % von Aldrich
I1: Ein hochmolekularer Mehrkomponentenester mit einer Viskosität von 110 bis 150 mPa*s bei 80 °C (Loxiol®G 70S von Henkel).
I2: Irgaphos-PEP-Q (Biphosphonit von Ciba-Geigy)

### Herstellung der thermoplastischen Formmassen

Die Komponenten A bis H wurden auf einem Zweiwellenextruder (ZSK 30 von Werner & Pfleiderer) bei 250 bis 280 °C gemischt, als Strang ausgetragen, gekühlt und granuliert.

Das getrocknete Granulat wurde bei 260 bis 280 °C zu Normkleinstäben, ISO-Prüfkörpern, Rundscheiben (60 x 3 mm) und Platten (1200 x 300 x 3 mm) verarbeitet, die Werkzeugtemperatur betrug 80 °C.

Die Wärmeformbeständigkeit der Proben wurde mittels der Vicat-Erweichungstemperatur ermittelt. Die Vicat-Erweichungstemperatur wurde nach DIN 53 460 mit einer Kraft von 49,05N und einer Temperatursteigerung von 50 K je Stunde an Normkleinstäben ermittelt.

Die Fließfähigkeit der Formmassen wurde nach DIN 53 735 bei einer Temperatur von 260 °C und 5 kg Belastung bestimmt.

Das Bruchverhalten wurde mittels des Durchstoßtests nach DIN 53 443 bei -30 °C geprüft.

Die Kerbschlagzähigkeit wurde nach ISO 179 1eA bei Raumtemperatur an ISO-Stäben geprüft.

Die thermische Ausdehnung (CTE) wurde nach DIN 53752, Verfahren A, an jeweils 2 Probekörpern (10 x 10 x 4) bestimmt. Angegeben sind die in Längsrichtung bei 25 °C gemessenen Werte.

Die Oberflächenqualität der Probekörper (große Platten) wurde visuell betrachtet, wobei folgende Abkürzungen verwendet wurden:
SA: Schlieren am Anguß
IO: keine Schlieren
Die Bestimmung der Faserlängen wurde folgendermaßen durchgeführt:

Die mittlere Länge (Zahlenmittelwert) der Fasern wurde am Glührückstand von Formkörpern bestimmt. Dazu wurde der Glührückstand in Zeiss-Immersionsöl aufgeschwemmt. Um eine Unterscheidung zwischen den Füllstoffpartikeln und den Fasern zu gewährleisten, wurde die Länge von mindestens 100 Fasern manuell bestimmt und daraus der Mittelwert berechnet.

Die Zusammensetzungen und Eigenschaften der erfindungsgemäßen thermoplastischen Formmassen 1 bis 3 und der Vergleichsmassen V1 und V2 sind Tabelle I zu entnehmen.

**Tabelle 1**

| Formmasse Nr. | VI | 1 | 2 | V2 | 3 | 4 |
|---|---|---|---|---|---|---|
| Komponente [Gew.-%] | | | | | | |
| A | 61,2 | 61,2 | 61,1 | 47 | 47 | 47 |
| B1 | 6,6 | 6,6 | 6,6 | 6,5 | 6,5 | 6,5 |
| B2 | 6,6 | 6,6 | 6,6 | 6,5 | 6,5 | 6,5 |
| C | 13,1 | 13,0 | 13,0 | 13,0 | 13,0 | 13,0 |
| D1 | 12 | 11,5 | 11,5 | 12 | 11,5 | 10 |
| D2 | - | 0,5 | 0,5 | - | 0,5 | - |
| D3 | - | - | - | - | - | 2 |
| F | - | - | - | 14,2 | 14,2 | 14,2 |
| G | - | - | 0,2 | - | - | - |
| I1 | 0,5 | 0,5 | 0,5 | 0,5 | 0,5 | 0,5 |
| I2 | - | - | - | 0,3 | 0,3 | 0,3 |

| Formmasse Nr. | VI | 1 | 2 | V2 | 3 | 4 |
|---|---|---|---|---|---|---|
| Vicat B [°C] | 131 | 130 | 129 | 123 | 125 | 12,7 |
| Wₛ-30°C [Nm] | 65 | 64 | 73 | 71 | 68 | 64 |
| Deformation [mm] | 14,7 | 14,5 | 15,2 | 15 | 14,9 | 14,7 |
| MVI [ml/10 min] | 11 | 12 | 11 | 17 | 19 | 18 |
| ak [kJ/m²] | 27 | 28 | 34 | 32 | 29 | 34 |
| CTE [10⁻⁶K⁻¹] | 54 | 52 | 52 | 62 | 57 | 54 |
| Oberfläche | SA | iO | iO | SA | iO | iO |
| mittlere Faserlänge [µm] | - | 217 | 220 | 231 | 240 | 207 |

Die erfindungsgemäßen thermoplastischen Formmassen zeichnen sich durch hohe Zähigkeit, d.h. hohe Durchstoßarbeit bei -30°C, hohe Kerbschlagzähigkeit und Reißdehnung sowie durch gute Fließfähigkeit aus. Trotz der Verwendung von Glasfasern ist die Oberflächenqualität der Probekörper sehr gut, der Zusatz der Fasern verbessert die Oberfläche im Angußbereich. Aufgrund ihrer geringen thermischen Ausdehnung eignen sich die erfindungsgemäßen thermoplastischen Formmassen zur Herstellung großflächiger Teile für den Fahrzeugbau. Gegenüber den jeweiligen Vergleichsmassen (1 gegenüber V1; 3 gegenüber V2) ist die Deformation vermindert, der MVI erhöht und die CTE vermindert. Damit weisen die erfindungsgemäßen Formmassen ein verbessertes Eigenschaftsprofil auf.

## Patentansprüche

1. Thermoplastische Formmasse, enthaltend die Komponenten A, B, C und D sowie gegebenenfalls E, F, G und H, deren Summe 100 Gew.-% ergibt,
a) 10 bis 93 Gew.-% mindestens eines aromatischen Polycarbonats A,
b) 3 bis 50 Gew.-% mindestens eines Pfropfpolymerisats B aus
b1) 40 bis 80 Gew.-% einer Pfropfgrundlage aus einem kautschukelastischen Polymeren B1 auf der Basis von Alkylacrylaten mit 1 bis 8 C-Atomen im Alkylrest, Ethylen/Propylen, Dienen oder Siloxanen und mit einer Glasübergangstemperatur von unter 0 C,
b2) 20 bis 60 Gew.-% einer Pfropfauflage B2 aus
b21) 60 bis 95 Gew.-% Styrol oder substituierten Styrolen B21 der allgemeinen Formel I 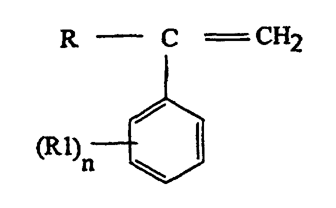 worin R einen C₁₋₈-Alkylrest oder Wasserstoff und R¹ einen C₁₋₈-Alkylrest bedeutet und n den Wert 1, 2 oder 3 hat, oder deren Mischungen und
b22) 5 bis 40 Gew.-% mindestens eines ungesättigten Nitrils B22,
c) 3 bis 50 Gew.-% mindestens eines thermoplastischen Copolymerisats C aus
c1) 60 bis 85 Gew.-% Styrol oder substituierten Styrolen C1 der allgemeinen Formel I oder deren Mischungen und
c2) 15 bis 40 Gew.-% mindestens eines ungesättigten Nitrils C2,
d) 1 bis 20 Gew.-% einer Mischung D aus, bezogen auf Komponente D,
d1) 5 bis 95 Gew.-% mindestens eines teilchenförmigen mineralischen Füllstoffs D1 und
d2) 5 bis 95 Gew.-% faserförmige Füllstoffe D2, wobei mindestens 50 Gew.-% der faserförmigen Füllstoffe eine Länge von mindestens 50 µm aufweisen,
e) 0 bis 10 Gew.-% mindestens eines Copolymers E aus mindestens zwei unterschiedlichen Alkylestern, aromatischen oder alkylaromatischen Estern der Acrylsäure oder der Methacrylsäure,
f) 0 bis 25 Gew.-% mindestens eines thermoplastischen Polyesters F,
g) 0 bis 2 Gew.-% mindestens einer niedermolekularen organischen Säure G,
h) 0 bis 25 Gew.-% mindestens einer halogenfreien Phosphorverbindung H,
i) 0 bis 45 Gew.-% weiterer Zusatzstoffe I.

2. Formmasse nach Anspruch 1, **dadurch gekennzeichnet, daß** die Polycarbonate der Komponente A auf Diphenolen der allgemeinen Formel II 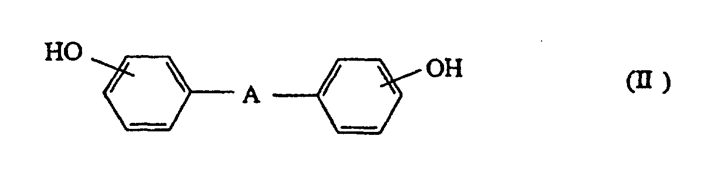 basieren, worin A eine Einfachbindung, eine C₁₋₃-Alkylen-, eine C₂-C₃-Alkyliden-, eine C₃₋₆-Cycloalkyliden-Gruppe, sowie -S- oder -SO₂- bedeutet.

3. Formmasse nach Anspruch 1 oder 2, **dadurch gekennzeichnet, daß** die Pfropfgrundlage B1 der Komponente B aufgebaut ist aus
b11) 70 bis 99,9 Gew.-% mindestens eines Alkylacrylates B11 mit 1 bis 8 C-Atomen im Alkylrest,
b12) 0 bis 30 Gew.-% eines weiteren copolymerisierbaren monoethylenisch ungesättigten Monomeren B12 oder deren Mischungen,
b13) 0,1 bis 5 Gew.-% eines copolymerisierbaren, polyfunktionellen, die Vernetzung bewirkenden Monomeren B13,
wobei die Gesamtmenge der Komponenten B11, B12 und B13 100 Gew.-% ergibt.

4. Formmasse nach einem der Ansprüche 1 bis 3, **dadurch gekennzeichnet, daß** die Komponente C aus 70 bis 85 Gew.-% Styrol und 15 bis 30 Gew.-% Acrylnitril aufgebaut ist.

5. Formmasse nach einem der Ansprüche 1 bis 4, **dadurch gekennzeichnet, daß** in Komponente D1 mindestens 95 Gew.-% der Teilchen einen Durchmesser von weniger als 45 µm aufweisen.

6. Verfahren zur Herstellung von Formmassen nach einem der Ansprüche 1 bis 5 durch Mischen der Komponenten A bis D und gegebenenfalls E bis I.

7. Verwendung von Formmassen nach einem der Ansprüche 1 bis 5 zur Herstellung von Fasern, Folien und Formkörpern.

8. Verwendung nach Anspruch 7 zur Herstellung von Karosserieteilen.

9. Formkörper, Fasern und Folien aus einer Formmasse gemäß einem der Ansprüche 1 bis 5.

10. Formkörper nach Anspruch 9 in Form von Karosserieteilen.

## Claims

1. A thermoplastic molding composition comprising components A, B, C and D, and also, where appropriate, E, F, G and H, the entirety of which gives 100% by weight:
a) from 10 to 93% by weight of at least one aromatic polycarbonate A,
b) from 3 to 50% by weight of at least one graft polymer B made from
b1) from 40 to 80% by weight of a graft base made from an elastomeric polymer B1 based on alkyl acrylates having from 1 to 8 carbon atoms in the alkyl radical, on ethylene-propylene, on dienes or on siloxanes, and having a glass transition temperature below 0°C,
b2) from 20 to 60% by weight of a graft B2 made from
b21) from 60 to 95% by weight of styrene or of substituted styrenes B21 of the formula I 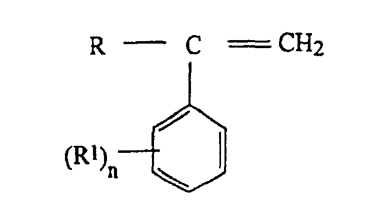 where R is C₁-C₈-alkyl or hydrogen and R¹ is C₁-C₈-alkyl and n is 1, 2 or 3, or a mixture of these, and
b22) from 5 to 40% by weight of at least one unsaturated nitrile B22,
c) from 3 to 50% by weight of at least one thermoplastic copolymer C made from
c1) from 60 to 85% by weight of styrene or of substituted styrenes C1 of the formula I, or mixtures of these compounds, and
c2) from 15 to 40% by weight of at least one unsaturated nitrile C2,
d) from 1 to 20% by weight of a mixture D made from, based on component D,
d1) from 5 to 95% by weight of at least one particulate mineral filler D1, and
d2) from 5 to 95% by weight of fibrous fillers D2, where at least 50% by weight of the fibrous fillers have a length of at least 50 µm,
e) from 0 to 10% by weight of at least one copolymer E made from at least two different alkyl, aromatic or alkylaromatic esters of acrylic acid or of methacrylic acid,
f) from 0 to 25% by weight of at least one thermoplastic polyester F,
g) from 0 to 2% by weight of at least one low-molecular-weight organic acid G,
h) from 0 to 25% by weight of at least one halogen-free phosphorus compound H,
i) from 0 to 45% by weight of other additives I.

2. A molding composition as claimed in claim 1, wherein the polycarbonates of component A are based on biphenols of the formula II 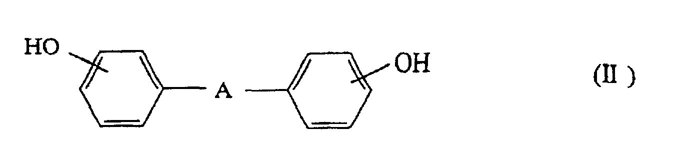 where A is a single bond, C₁-C₃-alkylene, C₂-C₃-alkylidene, C₃-C₆-cycloalkylidene, or else -S- or -SO₂-.

3. A molding composition as claimed in claim 1 or 2, wherein the graft base B1 of component B has been built up from
b11) from 70 to 99.9% by weight of at least one alkyl acrylate B11 having from 1 to 8 carbon atoms in the alkyl radical,
b12) from 0 to 30% by weight of another copolymerizable monoethylenically unsaturated monomer B12, or a mixture of these,
b13) from 0.1 to 5% by weight of a copolymerizable, polyfunctional crosslinking monomer B13,
where the entirety of components B11, B12 and B13 gives 100% by weight.

4. A molding composition as claimed in any one of claims 1 to 3, wherein component C has been built up from 70 to 85% by weight of styrene and 15 to 30% by weight of acrylonitrile.

5. A molding composition as claimed in any one of claims 1 to 4, wherein, in component D1, at least 95% by weight of the particles has a diameter below 45 µm.

6. A process for preparing molding compositions as claimed in any one of claims 1 to 5 by mixing components A to D and, where appropriate, E to I.

7. The use of molding compositions as claimed in any one of claims 1 to 5 for producing fibers, films or moldings.

8. The use as claimed in claim 7 for producing bodywork parts.

9. A molding, fiber or a film made from a molding composition as claimed in any one of claims 1 to 5.

10. A molding as claimed in claim 9 in the form of a bodywork part.

## Revendications

1. Masses de moulage thermoplastiques, contenant les composants A, B, C et D ainsi qu'éventuellement E, F, G et H, dont la somme totalise 100% en poids,
a) de 10 à 93% en poids d'au moins un polycarbonate aromatique A,
b) de 3 à 50% en poids d'au moins un polymère greffé B constitué de
b1) 40 à 80% en poids d'une base de greffage constituée d'un polymère B1 à élasticité de caoutchouc à base d'acrylates d'alkyle ayant de 1 à 8 atomes de carbone dans le radical alkyle, d'éthylène/propylène, de diènes ou de siloxanes et d'une température de transition vitreuse inférieure à 0°C,
b2) de 20 à 60% en poids d'une enveloppe de greffage constituée de
b21) 60 à 95% en poids de styrène ou de styrènes substitués B21 de la formule générale I 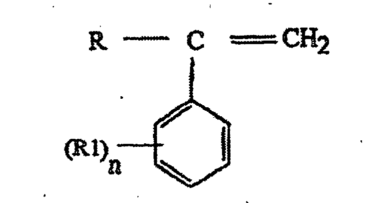 dans laquelle R représente un radical alkyle en C₁ à C₈ ou de l'hydrogène et R¹ un radical alkyle en C₁ à C₈ et n a une valeur de 1, 2 ou 3, ou leurs mélanges, et
b22) 5 à 40% en poids d'au moins un nitrile insaturé B22,
c) de 3 à 50% en poids d'au moins un copolymère thermoplastique C constitué de :
c1) 60 à 85% en poids de styrène ou de styrènes substitués C1 de la formule générale I, ou leurs mélanges, et
c2) 15 à 40% en poids d'au moins un nitrile insaturé C2,
d) de 1 à 20% en poids d'un mélange D constitué de, par rapport au composant D,
d1) 5 à 95% en poids d'au moins une matière de remplissage minérale particulaire D1 et
d2) 5 à 95% en poids de matières de remplissage fibreuses D2, dans lesquelles au moins 50% en poids des matières de remplissage fibreuses ont une longueur d'au moins 50 µm,
e) de 0 à 10% en poids d'au moins un copolymère E constitué d'au moins deux différents esters alkyliques, esters aromatiques ou alkylaromatiques de l'acide acrylique ou de l'acide méthacrylique,
f) de 0 à 25% en poids d'au moins un polyester thermoplastique F,
g) de 0 à 2% en poids d'au moins un acide organique à bas poids moléculaire G,
h) de 0 à 25% en poids d'au moins un composé phosphoré exempt d'halogène H,
i) de 0 à 45% en poids d'autres additifs I.

2. Masses de moulage selon la revendication 1, **caractérisées en ce que** les polycarbonates du composant A sont à base de diphénols de la formule générale II 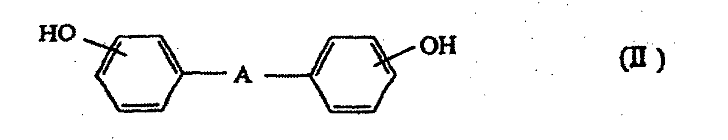 dans laquelle A représente une liaison simple ou un radical alkylène en C₁ à C₃, alkylidène en C₂ à C₃, cycloalkylidène en C₃ à C₆, ainsi que -S-ou -SO₂-.

3. Masses de moulage selon la revendication 1 ou 2, **caractérisées en ce que** la base de greffage B1 du composant B est constituée de
b11) 70 à 99,9% en poids d'au moins un acrylate d'alkyle B11 ayant de 1 à 8 atomes de C dans le radical alkyle,
b12) 0 à 30% en poids d'un autre monomère éthyléniquement insaturé copolymérisable B12, ou de mélanges de ceux-ci,
b13) 0,1 à 5% en poids d'un monomère copolymérisable polyfonctionnel opérant la réticulation,
la quantité totale des composants B11, B12 et B13 totalisant 100%.

4. Masses de moulage selon l'une quelconque des revendications 1 à 3, **caractérisées en ce que** le composant C est constitué de 70 à 85% en poids de styrène et de 15 à 30% en poids d'acrylonitrile.

5. Masses de moulage thermoplastiques selon l'une quelconque des revendications 1 à 4, **caractérisées en ce que**, dans le composant D1, au moins 95% en poids des particules présentent un diamètre de moins de 45 µm.

6. Procédé de préparation de masses de moulage selon l'une quelconque des revendications 1 à 5 par mélange des composants A à D et éventuellement E à I.

7. Utilisation de masses de moulage selon l'une des revendications 1 à 5 pour la production de fibres, feuilles et corps moulés.

8. Utilisation selon la revendication 7 pour la production de pièces de carrosseries.

9. Corps moulés, fibres et feuilles à base d'une masse de moulage selon l'une quelconque des revendications 1 à 5.

10. Corps moulés selon la revendication 9 sous la forme de pièces de carrosseries.
